# EUROPÄISCHE PATENTANMELDUNG

(11) **EP 2 413 483 A1**
(43) Veröffentlichungstag der Anmeldung: **01.02.2012**
(21) Anmeldenummer: 10171433.5
(22) Anmeldetag: 30.07.2010
(51) Int. Cl.: H02K 16/04

(54) **Elektrische Antriebsvorrichtung für ein Luftfahrzeug**

(71) Anmelder: Siemens Aktiengesellschaft, 80333 München (DE)
(72) Erfinder: Hamann, Jens, 90765, Fürth (DE); Klöpzig, Markus, 91320, Ebermannstadt (DE); Körner, Olaf, 90461, Nürnberg (DE)

(57) **Zusammenfassung**

Die Erfindung betrifft einen elektrischen Antrieb (1) für ein Luftfahrzeug, insbesondere für einen Hubschrauber (20) mit zumindest einem Rotor (23), der direkt durch eine dynamoelektrische Maschine (2) angetrieben ist, wobei
- die dynamoelektrische Maschine (2) in einer Duplexanordnung ausgeführt ist, wobei ein in einem Luftspalt (12) befindlicher Läufer (6) Permanentmagnete (13) auf einer Trägervorrichtung (14) aufweist, wobei die Statoren (4,5) der dynamoelektrischen Maschine (2) und/oder der Läufer (6) Kühlmittel aufweisen,
- zwischen angetriebenem Rotor und dynamoelektrischer Maschine(2), insbesondere ein Planetengetriebe (3) vorhanden ist, vorzugsweise in axialer Verlängerung der dynamoelektrischen Maschine (2).

## Beschreibung

Die Erfindung betrifft eine elektrische Antriebsvorrichtung für ein Luftfahrzeug, insbesondere einen Hubschrauber mit zumindest einem Rotor.

Ein Rotor ist dabei der sich drehende (rotierende) Teil einer Maschine, beispielsweise eines Hubschraubers oder eines Propellerflugzeugs. Dabei versteht man unter einem Rotor sowohl die Rotorblätter als auch den Rotorkopf, an dem diese Rotorblätter befestigt sind, ebenso auch die mitrotierende Drehachse in ihrer Lagerung.

Rotoren, die Flugzeuge antreiben, werden auch als Luftschrauben oder Propeller bezeichnet. Insbesondere bei Hubschraubern ist eine vergleichsweise hohe spezifische Leistung, also kW/kg, anzustreben, um die Traglast des Hubschraubers zu erhöhen.

Aus der DE 39 15 526 A1 ist ein Duplexelektromotor bekannt, bei dem ein Hohlrotor von außen und von Innen in Rotation versetzt wird und so eine vergleichsweise höhere Leistung gegenüber herkömmlichen Elektromotoren erzielt werden soll.

Aus der DE 198 56 647 A1 ist ein elektrischer Hochmomentmotor bekannt, der als hochpolige dauermagneterregte elektrische Maschine aufgebaut ist und einen hohlzylindrischen Läufer aus Weicheisen aufweist, der beidseitig mit Permanentmagneten belegt ist und koaxial zwischen einem äußeren und einem inneren Stator angeordnet ist und mit einer im Maschinengehäuse gelagerten Welle drehbar verbunden ist.

Derartige Duplexausführungen sind aus einer Vielzahl von Druckschriften bekannt. Beispielsweise aus der CN 1909340 A, der CN 201113670 Y, der WO 2007/024224 A1 oder aus der JP 3237295 A.

Aus der EP 1 612 415 A2 ist ein Windgenerator in Duplexanordnung und einem daran gekoppelten Getriebe bekannt.

Aus der WO 09/143669 A1 ist ein Hubschrauber mit Doppelrotoren bekannt, dessen Rotoren durch Elektromotoren angetrieben werden.

Aus der WO 2010/029113 A2 ist ein elektrisches Antriebssystem mit einem Rotorring bekannt, an welchem Magneten angeordnet sind, das zum Antrieb von Luftsportgeräten dient.

Aus der EP 1 931 015 A2 ist ein Startergenerator für Luftfahrzeuge in Duplexanordnung bekannt.

Aus der US 4 259 809 ist eine Antriebsvorrichtung für ein Flugzeug bekannt, bei dem ein Antrieb über ein Planetengetriebe einen Propeller bewegt.

Nachteilig bei den bisher bekannten Ausführungsformen der Motoren oder der Antriebe für Hubschrauber ist, dass die vorliegenden Konzepte, insbesondere für Hubschrauber aufgrund der aufwändigen Konstruktionen und damit des Gewichts des Antriebs nur bedingt geeignet sind.

Ausgehend davon liegt der Erfindung die Aufgabe zugrunde, einen Antrieb für einen Rotor eines Luftfahrzeugs, insbesondere für einen Hubschrauber zu schaffen, der eine vergleichsweise hohe Leistung bei geringem Eigengewicht seines Antriebs abgibt.

Die Lösung der gestellten Aufgabe gelingt durch einen elektrischer Antrieb für ein Luftfahrzeug, insbesondere für einen Hubschrauber mit zumindest einem Rotor, der direkt durch eine dynamoelektrische Maschine angetrieben ist, wobei
- die dynamoelektrische Maschine in einer Duplexanordnung ausgeführt ist, wobei ein in einem Luftspalt befindlicher Läufer Permanentmagnete auf einer Trägervorrichtung aufweist, wobei die Statoren der dynamoelektrischen Maschine und/oder der Läufer Kühlmittel aufweisen,
- zwischen angetriebenem Rotor und dynamoelektrischer Maschine, insbesondere ein Planetengetriebe vorhanden ist, vorzugsweise in axialer Verlängerung der dynamoelektrischen Maschine.

Eine dynamoelektrische Maschine - ein Elektromotor - in Duplexanordnung und insbesondere ein Planetengetriebe sind erfindungsgemäß in einem gemeinsamen Gehäuse als Direktantrieb eines Rotors eines Hubschraubers oder eines anderen Luftfahrzeugs, wie z.B. einem ein- oder mehrmotorigen Propellerflugzeug angeordnet. Das Planetengetriebe ist mit dem Elektromotor gemeinsam gelagert. Dies reduziert die Anzahl der Lagerstellen und führt so zu einem kompakten Antrieb.

Die Größe eines Elektromotors wird durch das erforderliche Drehmoment bestimmt. Dazu sind Direktantrieb, insbesondere Torquemotoren besonders geeignet. Um ein hoch ausgenutztes Antriebssystem zu erhalten, ist es notwendig, den Elektromotor hochtourig, insbesondere mit Umdrehungen > 10.000 1/min zu betreiben. Besonders vorteilhaft ist es somit einen Torquemotor mit einem Planetengetriebe kompakt zusammenzufügen, um zum einen das erforderliche Drehmoment und zum anderen die erforderliche Drehzahl, insbesondere für einen Rotorantrieb eines Hubschraubers zu erhalten.

Um die Ausnutzung des Elektroantriebs zusätzlich zu steigern, ist der Elektromotor in einer Duplexanordnung ausgeführt. Dabei ist ein Läufer in einem Luftspalt zwischen einem außenliegenden Stator und einem innenliegenden Stator angeordnet. Dazwischen ist der Läufer angeordnet.

Um nun die Ausnutzung zu steigern, wird zumindest der äußere Stator bei höheren Ansprüchen an die Ausnutzung auch der innere Stator mit einer Flüssigkeit, insbesondere Öl gekühlt. Das Öl wird zusätzlich für die Schmierung des Planetengetriebes benötigt. Öl ist ein elektrischer Isolierstoff und kann somit auch direkt die Wicklung des Stators umspülen. Die Kühlung durch Öl ist somit sehr effektiv, da die Wärme zum einen direkt an der Wärmequelle aufgenommen wird, als auch vorteilhafterweise gleichzeitig den Schmierstoff für das Planetengetriebe bilden kann. Somit ist nur ein Ölkreislauf notwendig, der die Statoren und das Getriebe umfasst. Eine Rückkühlung des Öls erfolgt über Wärmetauscher in und/oder am Luftfahrzeug. Die Statoren sind somit mit einer Kapselung versehen, die zumindest die Wicklung der Statoren oder den gesamten Stator u.a. mit Wicklung, Blechpaket und Wickelkopf umfasst. Die Kühlung des mit Permanentmagneten besetzten Läufers erfolgt durch Förderung von Luft durch den Luftspalt des Elektromotors.

In einer weiteren Ausführung dreht der Läufer im Vakuum des Elektromotors, um die Luftreibungsverluste zu vermeiden.

Um die Verluste, insbesondere die Wirbelstromverluste im Läufer weiter zu reduzieren, sind die Permanentmagnete geschichtet aufgebaut.

Die Wicklung der Statoren ist dabei als polyphasige Wicklung vorteilhafterweise jeweils als dreiphasige Wicklung ausgeführt.

Der Läufer ist hohl ausgebildet, da sich in seinem inneren der innenliegende Stator befindet. Vorzugsweise stellt diese Hohlform die als Trägervorrichtung für Permanentmagnete dient eine Glockenform dar, die insbesondere im Bereich der Aktivteils des innen- und außenliegenden Stators als Hohlzylinder ausgeführt ist. Dabei sind die Permanentmagnete sowohl an der äußeren Mantelfläche als auch an der inneren Mantelfläche des Hohlzylinders angeordnet. Vorteilhafterweise ist die Glocke, an der die Permanentmagnete angeordnet sind, zumindest zweigeteilt, was beispielsweise die Montage des Läufers zwischen innenliegenden und außenliegenden Stator wesentlich erleichtert.

Auf der Umfangsfläche einer Trägervorrichtung oder in axial verlaufenden Taschen der Trägervorrichtung des Läufers, die aus Weicheisen bestehen oder Aramide in Form von Fasern aufweist. sind Permanentmagnete vorgesehen. Die Trägervorrichtung weist innenliegende, also einem innenliegenden Stator elektromagnetisch zugeordnet Permanentmagnete auf, als auch außenliegende, also einem außenliegenden Stator elektromagnetisch zugeordnete Permanentmagnete auf.

Um den Wirkungsgrad der gesamten Antriebsanordnung Elektromotor-Planetengetriebe weiter zu steigern und weniger wartungsintensiv zu gestalten, wird vorteilhafterweise zumindest eine Lagerung als Magnetlagerung ausgeführt.

Mit den vorgestellten Merkmalen ergibt sich nunmehr ein Antrieb eines Rotors für einen Hubschrauber mit einem spezifischen Leistungsgewicht von 8KW/kg.

Die Erfindung sowie weitere vorteilhafte Ausgestaltungen der Erfindung werden anhand eines Ausführungsbeispiels näher beschrieben. Darin zeigen;
- FIG 1: einen prinzipiell dargestellten Hubschrauber,
- FIG 2: Antrieb eines Hauptrotors.

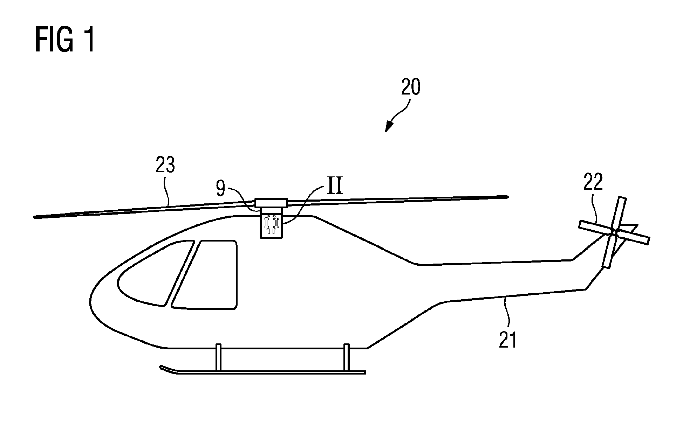

FIG 1 zeigt einen prinzipiell dargestellten Hubschrauber 20 mit einem Hauptrotor 23 und einem Heckrotor 22, der an einem Heckausleger 21 angebracht ist. Mit "X" ist dabei der Ausschnitt bezeichnet, an dem ein Antrieb 1 des Hauptrotors 23 angeordnet ist.

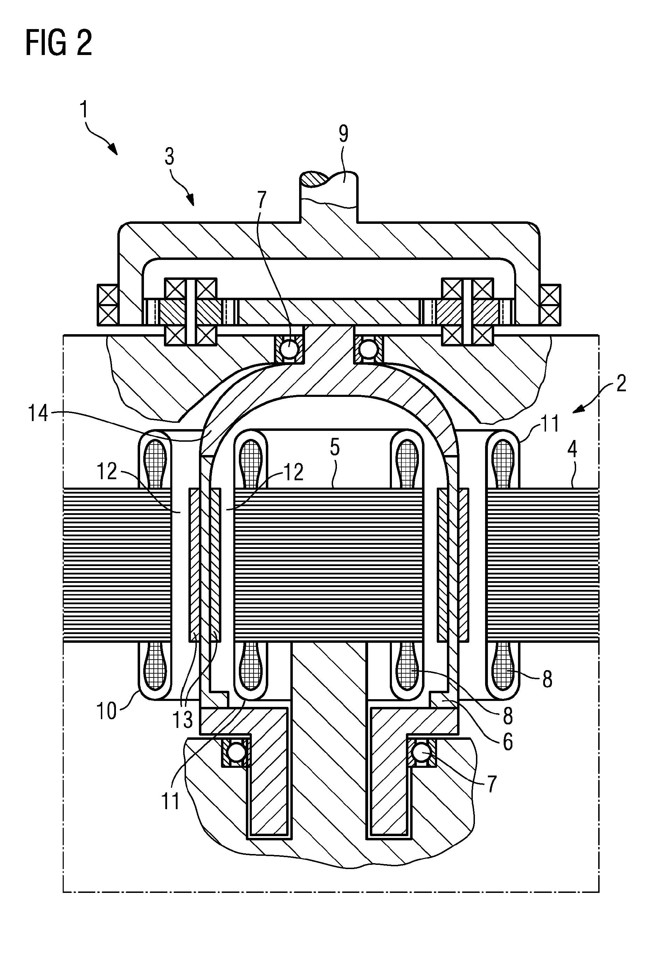

FIG 2 zeigt in einem prinzipiellen Längsschnitt eines Antriebs 1 eines Hauptrotors 23 eines Hubschraubers 20. Ein Läufer 6 einer vertikal aufgestellten dynamoelektrischen Maschine 2 weist auf einer Innenseite als auch auf seiner Außenseite seiner Trägervorrichtung 14 Permanentmagnete 13 auf. Um auch bei erhöhten Fliehkräften die Permanentmagnete 13 halten zu können, sind vorteilhafterweise die Permanentmagnete entweder nur auf der Innenseite der Trägervorrichtung 14 des Läufers 6 angeordnet.

Alternativ dazu sind die Permanentmagnete 13 auf der Innenseite der Trägervorrichtung 14 angeordnet, während sich die Permanentmagnete 13, die im Wesentlichen mit dem außen liegenden Stator 4 wechselwirken an der Außenseite der Trägervorrichtung 14 in axial verlaufenden Taschen befinden.

Die Permanentmagnete 13 sind jeweils geschichtet aufgebaut, um die Wirbelstromverluste zu reduzieren. Des Weiteren sind die Permanentmagnete 13 über ihren axialen Verlauf des Läufers 6 betrachte geschrägt und/oder gestaffelt angebracht, um eine Vergleichmäßigung des abgegebenen Drehmoments des Antriebs zu erhalten.

Diese Permanentmagnete 13 wechselwirken mit dem Wicklungssystem des jeweils zugewandten Stator 4,5, so dass der Antrieb 1 ein vergleichsweise hohes Drehmoment entfaltet. Über ein in axialer Verlängerung der dynamoelektrischen Maschine 2 angeordnetes Planetengetriebe 3 wird nunmehr ein Rotor eines nicht näher dargestellten Hubschraubers über eine Rotorwelle 9 angetrieben.

Alternativ zu einem klassischen Planetengetriebe aus Zahnrädern, wird ein Getriebe mit der gleichen Funktionalität, nämlich Erhöhung der Drehzahl, durch Permanentmagnete realisiert. Dies vermeidet Getriebegeräusche und es sind keine Verschleißteile zu warten und auszutauschen.

Der innenliegende Stator 5 als auch der außenliegende Stator 4 sind stationär und weisen jeweils ein geschichtetes Blechpaket, vorzugsweise aus Sandwichblechen auf.

Die Trägervorrichtung 14 des Läufers 6 ist vorteilhafterweise mehrteilig aufgebaut, indem der magnetisch aktive Teil, an dem die Permanentmagnete 13 angeordnet sind als Hohlzylinder ausgebildet ist. Die Polzahl der dem innenliegenden Stator 5 und dem außenliegenden Stator 4 zugewandten Seiten des Läufers 6 ist dabei vorzugsweise gleich.

Eine Lagerung des Läufers 6 ist sowohl in diesem Fall an der vom Antrieb 1 abgewandten Seite der dynamoelektrischen Maschine 2, als auch auf der dem Hauptrotor 23 zugewandten Seite vorgesehen. Die Lagerung zwischen dynamoelektrischer Maschine 2 und Planetengetriebe 3 bildet somit eine gemeinsame Lagerung von Planetengetriebe 3 und dynamoelektrischer Maschine 2, in Duplexanordnung.

Vorzugsweise sind dabei dynamoelektrische Maschine 2 als auch Planetengetriebe 3 in einem Gehäuse angeordnet. Dies vereinfacht den Aufbau des Antriebs 1 und gestattet somit eine abschließende Vorabfertigung dieses Antriebs 1.

Um die Effizienz des Antriebs 1 weiter zu steigern, weist sowohl der innenliegende als auch der außenliegende Stator 4,5 eine Ölkühlung auf. Demzufolge ist selbstverständlich der Luftspalt 12 der dynamoelektrischen Maschine 2, in dem sich der Läufer 6 bewegt, durch geeignete Maßnahmen, beispielsweise durch Abdichtungsmaßnahmen wie eine Can 10, 11 abgeschottet. Von der Can 10, 11 ist zumindest das Wicklungssystem mit seinen Wickelköpfen 8 umfasst und damit gekühlt.

In einer weiteren Ausführungsform umfasst die Can auch das Blechpaket der Statoren 4,5, Wickelkopf 8 und Wicklungssystem.

Ein nicht näher dargestellter Ölkühlkreislauf wird vorteilhafterweise zumindest zum Teil auch über das Planetengetriebe 3 geführt und dient dort u.a. der Schmierung und Kühlung der Zahnräder.

Um die Luftreibungsverluste des Läufers 6 innerhalb des Luftspaltes 12 des Antriebs in Duplexanordnung weiter zu reduzieren, ist in dem Luftspalt 12 vorzugsweise ein Vakuum vorgesehen.

Mit dem beschrieben Antrieb 1 ist nunmehr ein Antriebssystem für einen Hubschrauber 20 mit ca. 200 bis 300 KW bei ca. 2500 1/min geschaffen bei einem spezifischen Leistungsgewicht von ca. 8 KW/kg.

## Patentansprüche

1. Elektrischer Antrieb (1) für ein Luftfahrzeug, insbesondere für einen Hubschrauber (20) mit zumindest einem Rotor (23), der direkt durch eine dynamoelektrische Maschine (2) angetrieben ist, wobei
- die dynamoelektrische Maschine (2) in einer Duplexanordnung ausgeführt ist, wobei ein in einem Luftspalt (12) befindlicher Läufer (6) Permanentmagnete (13) auf einer Trägervorrichtung (14) aufweist, wobei die Statoren (4,5) der dynamoelektrischen Maschine (2) und/oder der Läufer (6) Kühlmittel aufweisen,
- zwischen angetriebenem Rotor und dynamoelektrischer Maschine(2), insbesondere ein Planetengetriebe (3) vorhanden ist, vorzugsweise in axialer Verlängerung der dynamoelektrischen Maschine (2).

2. Elektrischer Antrieb (1) nach Anspruch 1, **dadurch gekennzeichnet , dass** Planetengetriebe (3) und dynamoelektrische Maschine (2) zumindest eine gemeinsame Lagerung aufweisen.

3. Elektrischer Antrieb (1) nach Anspruch 1 oder 2, **dadurch gekennzeichnet , dass** die Trägervorrichtung (14) des Läufers (6) Weicheisen und/oder Aramid aufweist.

4. Elektrischer Antriebs (1) nach einem der vorhergehenden Ansprüche, **dadurch gekennzeichnet , dass** die Trägervorrichtung (14) des Läufers (6) mehrteilig aufgebaut ist.

5. Elektrischer Antrieb (1) nach einem der vorhergehenden Ansprüche, **dadurch gekennzeichnet , dass** der Antrieb (1) zumindest ein Magnetlager aufweist.

6. Elektrischer Antrieb (1) nach einem der vorhergehenden Ansprüche, **dadurch gekennzeichnet , dass** zumindest ein Stator (4,5) einen Ölkreislauf zur Kühlung vorsieht.

7. Elektrischer Antrieb (1) nach Anspruch 6, **dadurch gekennzeichnet , dass** die Kühlung zumindest die Wicklung des Stators erfasst.

8. Elektrischer Antrieb (1) nach Anspruch 1, **dadurch gekennzeichnet , dass** der Ölkreislauf neben einem Stator (4,5) auch das Planetengetriebe (3) erfasst.
